# EUROPEAN PATENT SPECIFICATION

(11) **EP 2 254 378 B1**
(45) Date of publication and mention of the grant of the patent: **18.01.2012**
(21) Application number: 09290371.5
(22) Date of filing: 18.05.2009
(51) Int. Cl.: H04W 68/04

(54) **A method of paging a user terminal in idle mode, and a femtocell-controlling gateway**
Verfahren zum Paging eines Benutzerendgeräts im Ruhemodus und Femtozellen-Steuerungs-Gateway
Procédé d'appel d'un terminal utilisateur en mode repos, et passerelle de contrôle de femtocellule

(43) Date of publication of application: 24.11.2010
(73) Proprietor: Alcatel Lucent, 75008 Paris (FR)
(72) Inventor: Brend, Graham, Bathford, Bath BA1 7UE Somerset (GB); Sapiano, Philip, Corsham, SN13 9AY Wiltshire (GB); Bradley, Nigel, SN6 6LT, Wiltshire (GB); Putman, Tony, Chippenham, SN15 5AQ, Wiltshire (GB)
(74) Representative: Sarup, David Alexander

(56) References cited:
- WO-A-2007/040452
- WO-A-2008/062200
- WO-A-2009/036620
- WO-A-2009/043919
- SAKAMOTO T ET AL: "Location registration and paging for in-building personal multi-media communication systems" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, vol. 3, 28 April 1996 (1996-04-28), pages 1878-1882, XP010162719 ISBN: 978-0-7803-3157-0

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

Femtocell base stations are sometimes referred to as femtos.

In order to be integrated with a macrocellular network, the femtocell base stations need to send and receive signalling messages between themselves and various elements within the macrocellular network. The macrocellular network may be, for example, a second generation (2G) network , a 2.5G network or a third generation (3G) network. As this signalling is standards compliant, the femtocells need to collectively appear as a relatively small number of 3GPP compliant nodes.

As it is not considered practical for each of the large number of femtos to each be given radio network controller (RNC) functionality, the femtos are instead organised into clusters, each femto in a cluster being connected to the core network via a gateway for that cluster. Accordingly, the gateway is considered by a core network of the macrocellular network as being an RNC. In other words, gateways are virtual RNCs. Each gateway and hence each cluster of femtos behaves like an RNC both when communicating with a Serving GPRS (General Packet Radio Service) Support Node (SGSN) in a packet-switched core network and when communicating with a third generation Mobile Switching Centre (MSC) in a circuit-switched core network.

Each gateway acts as a signalling interface between the core network elements and the cluster of femtocells, so can be considered as a virtual RNC that supports the cluster of femtocells as a whole.

A cluster may be many thousands of femtocells, all of which are supported by a single corresponding gateway. This can lead to diffculties in locating, for call connection purposes, in which femtocell a user terminal resides. This is particularly so when the core network of the macrocellular network wishes to initiate a mobile-terminated session to the user terminal determined as being within a particular cluster, and the user terminal is in idle mode.

In a known approach, RNCs inform the core network of location area updates as user terminals move. When a mobile-terminated session is desired, the core network sends a paging message to the RNC that was the source of the last received location area update request in respect of that user terminal. Of course, the RNC may be a virtual RNC, such as the gateway of a cluster of femtocells.

If the user terminal is in active mode connection to the femto, in other words currently attached to the femto, such as in an active call connection, the gateway simply forwards the paging message to that particular femto.

However, if the user terminal is in idle mode so not currently connected to any of the femtos, the known approach is for the gateway to instead forward the paging message to all femtocells in the cluster that have the same Location Area Code (LAC) as the location area in which the user terminal was last in active connection. However, it is common, in order to provide simple handling of LACs in a core network, to have very few LACs allocated to femtocells. Accordingly, the paging message might well need to be sent out to many thousands of femtocells in the cluster that all share the same LAC. In a worst case scenario, the paging message might need to be sent out to all the femtocells in the cluster.

Due to the large number of femtocells which might need to be paged, there can be considerable traffic loading on the gateway, the internet backhaul connections to femtos and the paging channels of the femtos involved.

Background is provided by International (P.C.T.) Patent Publication WO 2008/062200 and a paper by Sakamoto T Et A1 entitled "Location registration and paging for in-building personal multi-media communication systems" Vehicular Technology Conference, 1996. Mobile Technology For The Human Race., IEEE 46th Atlanta, GA, USA 28 April-1 May 1996, New York, NY, USA, IEEE, US, vol. 3, 28 April 1996 (1996-04-28), pages 1878-1882, XP010162719, ISBN: 978-0-7803-3157-0.

It is known from WO 2008/062200 to provide a method of paging a user terminal that is in idle mode and is within a cluster of femtocells, the femtocells being provided by femtocell base stations, the femtocell base stations that provide the cluster of femtocells being connected via a femtocell controlling gateway to a core network, in which the or each femtocell in which the paging message is to be sent is selected by the gateway dependent upon a user terminal identifier and an identity of at least one coverage area that the user terminal was previously connected to.

### Summary

The present invention is characterised over the disclosure of WO 2008/062200 in that each coverage area is a femtocell, a record is kept relating each user terminal identifier to the corresponding identity of the respective at least one femtocell that the user terminal is known to have frequently connected to; in which the record includes times of last active call connection of each user terminal, in which upon delay since the last active connection of the user terminal being less than a predetermined time threshold, the femtocell in which the user terminal was last in active session connection is selected as the single femtocell in which the paging message is to be sent; and in which upon the delay since the last active connection of the user terminal exceeding the predetermined time threshold or upon a paging message being sent just in the femtocell in which the user terminal was last in active session connection and being determined as not acknowledged by the user terminal within a predetermined time, the femtocells that the user terminal is known to have frequently connected to are selected from the record as the femtocells in which the paging message is to be sent.

The reader is now referred to the appended independent claims.

Preferred embodiments provide a way to reduce the number of femtocells that transmit a paging message in order to locate a user terminal in idle mode, by the femtocell-controlling gateway intelligently reducing the number of femtocells to which the paging message is sent.

Some preferred features are laid out in the dependent claims to which the reader is now referred.

In some embodiments, the gateway further comprises a record relating each user terminal identifier to the corresponding identity of the respective femtocell in which the user terminal was last in active session connection, and the processor is operative to select, using said record, the or each femtocell in which the paging message is to be sent.

In some embodiments, the femtocells in which the paging message is to be sent are selected using said record and a database identifying the neighbouring femtocells of each femtocell.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 is a diagram illustrating the femtocell controller/gateway ("Home Cell controller/gateway") shown in the network of Figure 1,
Figure 4 is a message sequence diagram illustrating, in the network shown in Figure 1, connection of a user terminal to a femto and subsequent recordal of information in the gateway,
Figure 5 is a flowchart illustrating how the gateway uses information previously recorded to determine which femtos to page, and
Figure 6 is a message sequence diagram illustrating, in the network shown in Figure 1, the paging of femtos that then broadcast the paging message in order to reach a user terminal in idle mode.

### Detailed Description

We now describe a network including femtocell base stations then look in greater detail at the femtocell controller/gateway, recordal of information identifying a femto to which the user terminal is attached, and selection of femtocells for paging.

This example is described using 3GPP terminology, although other examples are envisaged.

### Network

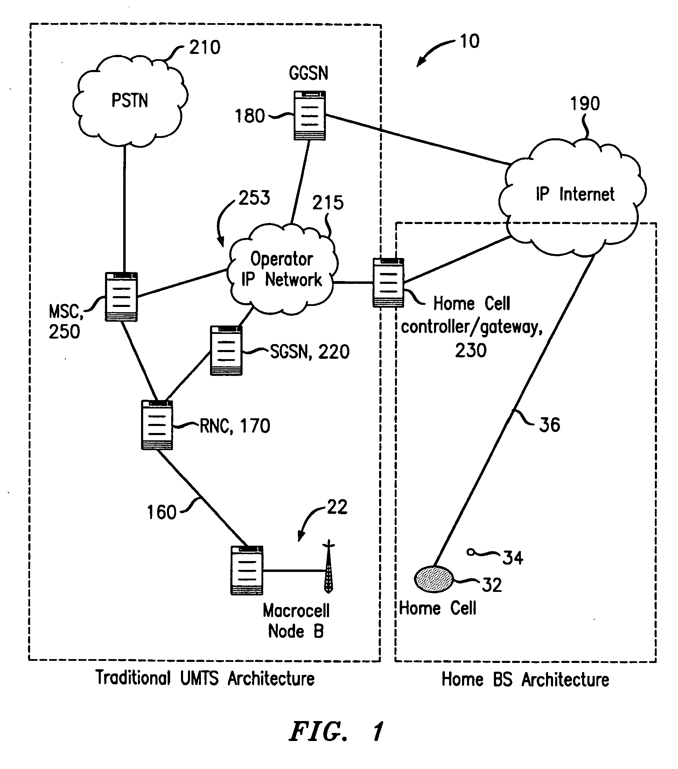

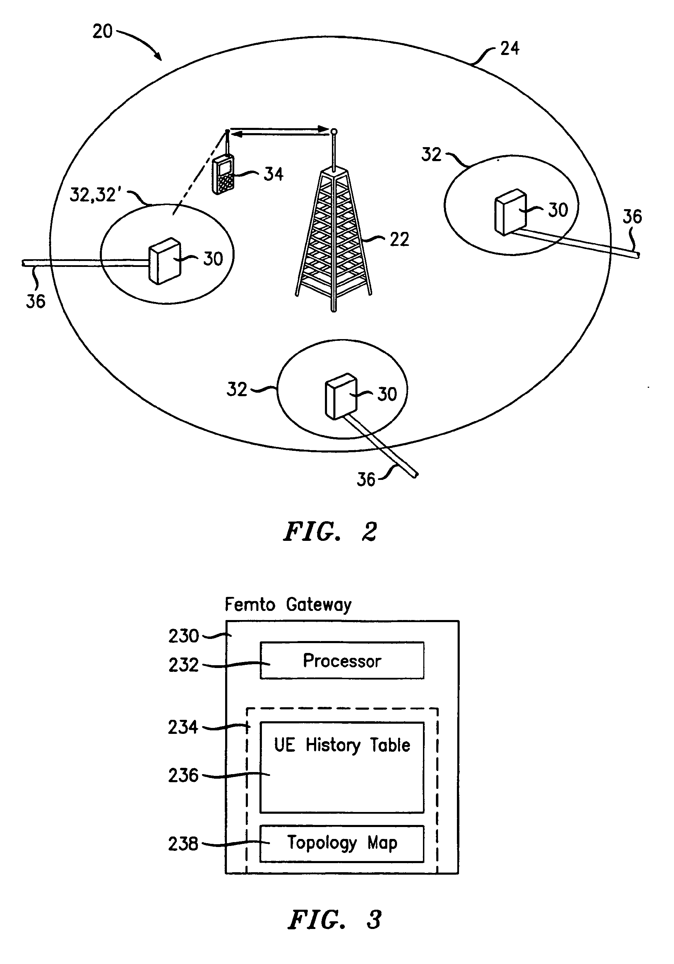

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250, SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 32. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 3, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

### Femtocell controller/gateway

As shown in Figure 3, the femtocell controller/gateway 230 (often referred to simply as the gateway) includes a processor 232 connected to a memory 234 in which is stored a user terminal history table 236 and a network topology information 238. The user terminal history table 236 identifies user terminals and their histories as to which femtos they have been connected to. The network topology information 238 is information regarding which femtos are known to be neighbours of which others. For convenience this network topology information 238 is often referred to as a topology map.

### Selecting femtos in which a user terminal will be paged

The inventors realised that it would be useful to use information that could be made available in the gateway in order to intelligently reduce the number of femtocells to which the gateway needs to forward a paging message, for transmission in order to determine in which femtocell the user terminal in idle mode resides.

### Recordal of information identifying a femto to which the user terminal is attached

The gateway 230 receives information about the presence of a user terminal in a femtocell when a user terminal attaches to a femtocell, sets up a call via the femtocell, or crosses from a femtocell that is one of those having a first location area code (LAC) to a femtocell that is one having a different LAC.

As part of these procedures the gateway 230 is provided with the user terminal's identity in the form of its International Mobile Subscriber Identity (IMSI). Accordingly, the gateway 230 tracks the user terminal as the user terminal connects and disconnects from femtocells within one cluster, or roams by crossing from a femtocell that is one of those having a first location area code (LAC) to a femtocell that is one having a different LAC. An example of this tracking is now described.

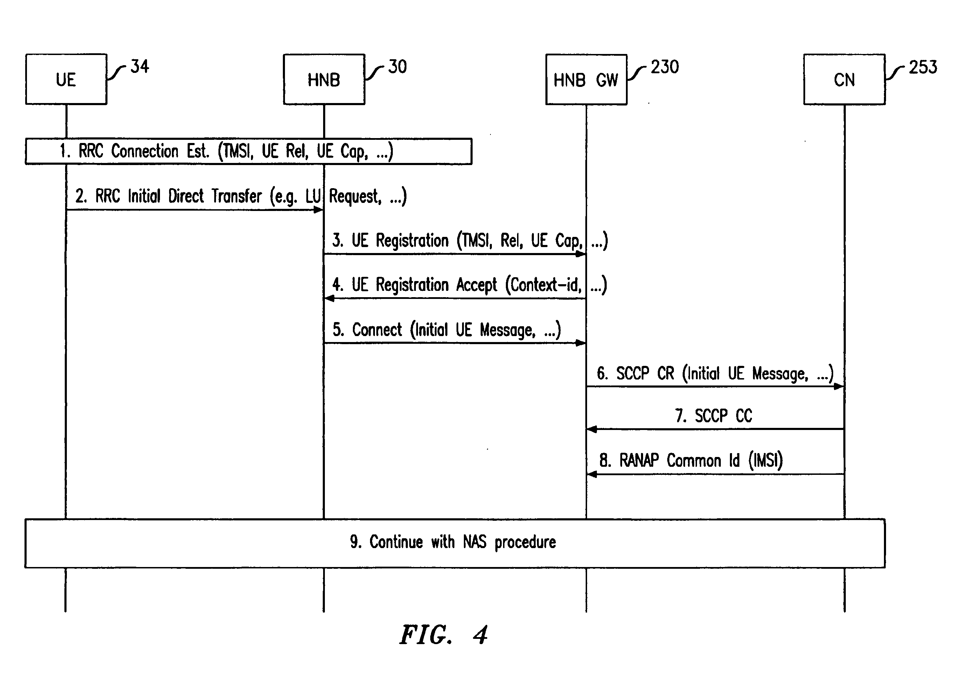

As shown in Figure 4, a user terminal attaches to a femto, which in this example is open- or public- access, in other words, user terminals that are not on a list of allowed users terminals may also call-connect via the femto. The user terminal 34 is registered to the gateway 230 as defined in Third Generation Partnership Project (3GPP) Technical Specification TS 25.467 "UTRAN architecture for 3G Home NodeB Stage 2". As part of this procedure, the gateway 230 stores information about the user terminal, namely its IMSI, and information associating the user terminal with the femto that the user terminal visited. This is explained in more detail as follows.

As shown in Figure 4, upon camping on the femto 30, the user terminal 34 initiates an initial Non-Access Stratum (NAS) procedure, namely a Location Update procedure in this example, by establishing (step 1) a radio resource control (RRC) connection with the femtocell.

The user terminal 34 then transmits (step 2) to the femto 30 an RRC Initial Direct Transfer message carrying the initial NAS message (Location Update request) with some form of identity of the user terminal, in this example the Temporary Mobile Subscriber Identity (TMSI) of the Users Subscriber Identity Module, (U)SIM, of the user terminal 34.

The femto 30 then sends (step 3) a UE REGISTER REQUEST to the gateway 230 so as to register the user terminal on the gateway. (UE denotes User Equipment, which is another name for a user terminal).

As the femto permits public access, the gateway responds (step 4) by sending a UE REGISTRATION ACCEPT message to the femto. This message includes a context-id allocated to the user terminal.

The femto then sends (step 5) a CONNECT message containing a Radio Access Network Application Part (RANAP) Initial UE message.

Reception of the CONNECT message by the femto triggers the sending (step 6) of a Signalling Connection Control Part (SCCP) connection request from the gateway towards the core network. This request includes the Initial UE message.

The core network 253 responds (step 7) by sending a SCCP connection Confirm message to the gateway.

The core network 253 subsequently sends (step 8) a RANAP Common Id message, containing the IMSI of the user terminal, to the gateway 230. The gateway 230 stores information of the user terminal's IMSI and an identifier of the femto that the user terminal is connected to. The information also includes the time when the femto indicated to the gateway that the user terminal had connected to the femto and a count of how frequently the user terminal has connected to that particular femto.

After this, the Non-Access Stratum procedure, namely the location update procedure in this example, continues (step 9) between the user terminal 34 and core network 253, via the femto 30 and the gateway 230.

### Selection of femtocells for paging

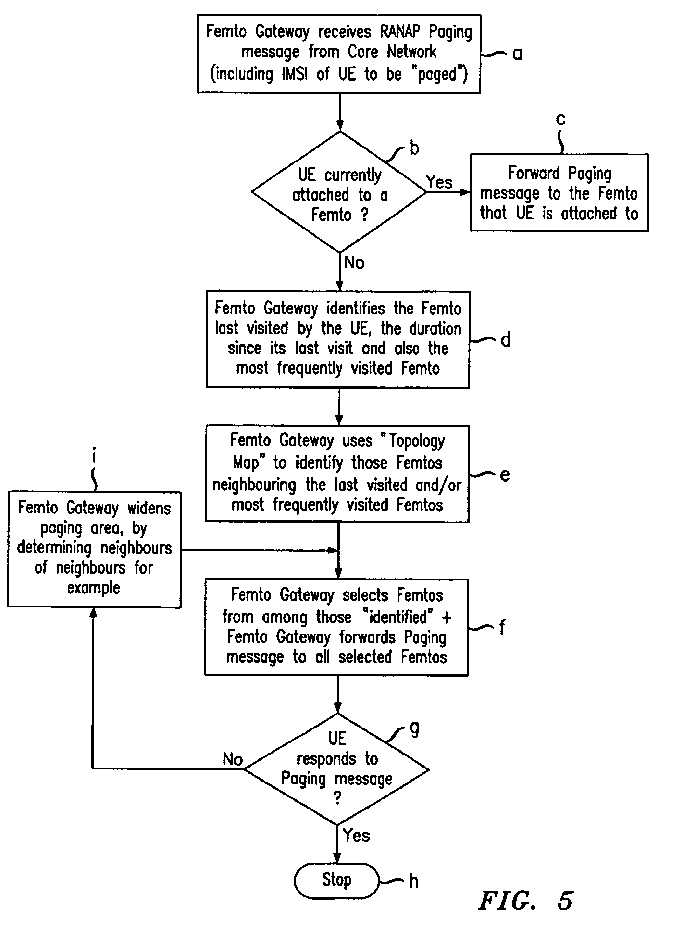

As shown in Figure 5, when it is desired to set up a mobile-terminated call connection to a user terminal that was last connected via the gateway, the core network sends a Radio Access Network Application Part (RANAP) paging message to the gateway. The gateway receives (step a) this message which includes the IMSI of the user terminal to be paged, and the location area code of the location area in which the user terminal was last known to be located.

The gateway determines (step b) whether the user terminal is currently attached to a femto within the cluster connected via the gateway. If yes, the gateway simply forwards (step c) the RANAP Paging message on to that femto.

If no, (i.e. the user terminal is not currently connected, so is instead in idle mode,) the gateway uses the information that the gateway previously saved about the user terminal in order to determine which femtos to forward the paging message to. Specifically the gateway identifies (step d) the femto that the user terminal was last connected to, the length of time since that last connection, and femtos known to be frequently visited by that user terminal.

Then the gateway uses information of which femtos are neighbouring which others, in other words the topology map, to identify (step e) those femtos neighbouring the last visited femto and/or those femtos neighbouring the femtos most frequently visited by that user terminal.

A selection of which femtos to forward the paging message to is then made based on when that connection was made, in other words, how long the user terminal has been idle. For example, if the user terminal has only been idle for a few seconds, the gateway decides to only send the paging message to the last known-to-be visited femto, or the last known-to-be visited femto plus its neighbours. Conversely, if the user terminal has been idle for longer, the gateway decides to forward the paging message only to those femtos known to be most frequently visited by the user terminal, at least in the first instance.

The gateway then forwards (step f) the paging message to all the femtos that were selected. Each of these femtos broadcasts the paging message within its femtocell area.

The gateway determines (step g) whether the user terminal responded to the femto, being in the femtocell of which the user terminal currently resides. If yes, the process ends (step h). If no, the gateway acts (step i) to include more femtos into those selected, so as to effectively widen the search area. For example, if the last-visited femto plus its neighbours were selected last time, the gateway identifies, and includes in the selected femtos to be paged, the neighbours of those neighbours.

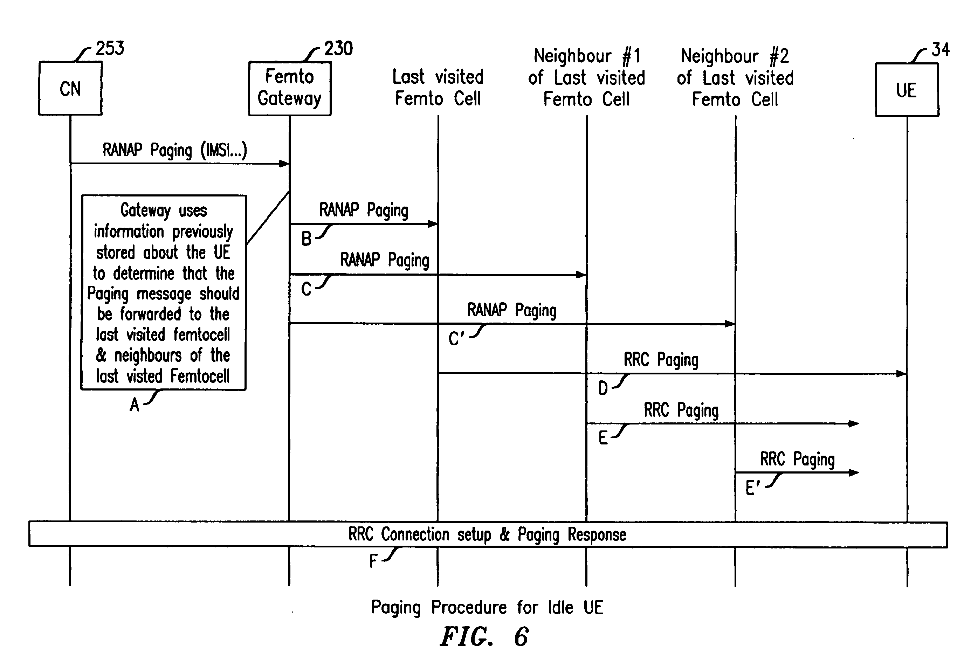

An example is shown in Figure 6, where having selected the last visited femto plus its neighbours (step A), the paging message is sent out to the last-visited femto (step b) and each of the neighbours (step c,c'). These femtos send out (steps D, E, E') the paging message in their femtocell areas. In this example, the last visited femto happens to send out (step D) the paging message that is successfully received by the user terminal. There is then a radio resource control (RRC) connection setup and paging response (step F) between the user terminal and core network via that femto.

In some other embodiments the time of the last connection to a visited femto is not recorded nor considered in the selection of femtos to page, the identity of the femto last actively connected to is simply used together with the topology map, to identify neighbours, and if necessary neighbours of those neighbours.

In some embodiments rather than considering the last visited femto, a list of known-to-be frequently visited femtos is stored for each user terminal and looked-up as and when a mobile-terminated call to a user terminal is desired. In one such embodiment, if the delay since last active call connection is less than some seconds, just the frequently visited femtos are selected for paging. If the delay is longer than this threshold, the frequently visited femtos plus their neighbours are selected for paging.

### General

The present invention may be embodied in other specific forms without departing from its essential characteristics. The described embodiments are to be considered in all respects only as illustrative and not restrictive. The scope of the invention is, therefore, indicated by the appended claims. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of paging a user terminal (UE) that is in idle mode and is within a cluster of femtocells, the femtocells being provided by femtocell base stations, the femtocell base stations that provide the cluster of femtocells being connected via a femtocell controlling gateway (230) to a core network, in which the or each femtocell (32) in which the paging message is to be sent is selected by the gateway dependent upon a user terminal identifier and an identity of at least one coverage area that the user terminal was previously connected to, **characterised in that** each coverage area is a femtocell,
a record (236) is kept relating each user terminal identifier to the corresponding identity of the respective at least one femtocell that the user terminal is known to have frequently connected to;
in which the record includes times of last active call connection of each user terminal;
in which upon delay since the last active connection of the user terminal being less than a predetermined time threshold, the femtocell in which the user terminal was last in active session connection is selected as the single femtocell in which the paging message is to be sent;
and in which upon the delay since the last active connection of the user terminal exceeding the predetermined time threshold or upon a paging message being sent just in the femtocell in which the user terminal was last in active session connection and being determined as not acknowledged by the user terminal within a predetermined time, the femtocells that the user terminal (34) is known to have frequently connected to are selected from the record as the femtocells in which the paging message is to be sent.

2. A method according to claim 1, in which upon the delay since last active connection exceeding a predetermined timelimit, the femtocells selected as the femtocells in which the paging message is to be sent are the femtocells that the user terminal is known to be frequently connected to and their neighbours.

3. A method according claim 1 or claim 2, in which upon a paging message being sent just in the femtocells that the user terminal is known to be frequently connected to and being determined as not acknowledged by the user terminal within a predetermined time, the femtocells that the user terminal is known to have frequently connected to and their neighbouring femtocells are selected as the femtocells in which the paging message is to be sent.

4. A femtocell-controlling gateway (230) for connection of a cluster of femtocells (32) to a core network, the femtocell-controlling gateway comprising a processor (232) configured to select, in use, in which of the femtocells to page a user terminal that is in idle mode, dependent upon a user terminal identifier and the identity of at least one coverage area that the user terminal was previously connected to;
**characterised in that** each coverage area is a femtocell,
the gateway further comprises a record relating each user terminal identifier to the corresponding identity of the respective at least one femtocell that the user terminal is known to have frequently connected to,
in which the record includes times of last active call connection of each user terminal;
in which upon the delay since the last active connection of the user terminal being less than a predetermined time threshold, the femtocell in which the user was last in active session connection is selected as the single femtocell in which the paging signal is to be sent; and
upon the delay since the last active connection of the user terminal exceeding the predetermined time threshold or upon a paging message being sent just in the femtocell in which the user terminal was last in active session connection and being determined as not acknowledged by the user terminal within a predetermined time, the femtocells that the user terminal is known to have frequently connected to are selected as the femtocells in which the paging message is to be sent.

## Patentansprüche

1. Verfahren zum Paging eines Benutzerendgeräts (UE), welches sich im Ruhemodus und innerhalb eines Clusters von Femtozellen befindet, wobei die Femtozellen von Femtozellen-Basisstationen bereitgestellt werden, wobei die Femtozellen-Basisstationen, welche die Cluster von Femtozellen bereitstellen, über ein Femtozellen-Steuerungs-Gateway (230) an ein Kernnetzwerk angebunden sind, in welchem die oder jede Femtozelle (32), in die die Paging-Nachricht zu senden ist, in Abhängigkeit von einer Benutzerendgerät-Kennung und einer Identität mindestens eines Abdeckungsbereichs, mit welchem das Benutzerendgerät vorher verbunden war, von dem Gateway ausgewählt wird, **dadurch gekennzeichnet, dass** jeder Abdeckungsbereich eine Femtozelle ist,
ein Register (236) geführt wird, welches jede Benutzerendgerät-Kennung mit der entsprechenden Identität der jeweiligen mindestens einen Femtozelle, von welcher bekannt ist, dass das Benutzerendgerät häufig mit dieser verbunden war, in Beziehung bringt;
wobei das Register die Zeiten der letzten aktiven Anrufverbindung eines jeden Benutzerendgeräts enthält;
wobei, wenn der Zeitabstand seit der letzten aktiven Verbindung des Benutzerendgeräts kürzer ist als ein vorbestimmter Zeitgrenzwert, diejenige Femtozelle, in welcher das Benutzerendgerät zuletzt eine aktive Sitzungsverbindung hatte, als die einzige Femtozelle, in welche die Paging-Nachricht zu senden ist, ausgewählt wird;
und wobei, wenn der Zeitabstand seit der letzten aktiven Verbindung des Benutzerendgeräts einen vorbestimmten Zeitgrenzwert überschreitet oder wenn eine Paging-Nachricht gerade in diejenige Femtozelle gesendet wird, in welcher das Benutzerendgerät zuletzt eine aktive Sitzungsverbindung hatte, und welche als von dem Benutzerendgerät innerhalb einer vorbestimmten Zeit nicht quittiert bestimmt wird, diejenigen Femtozellen, von denen bekannt ist, dass das Benutzerendgerät (34) häufig mit diesen verbunden war, aus dem Register als die Femtozellen, in welche die Paging-Nachricht zu senden ist, ausgewählt werden.

2. Verfahren nach Anspruch 1, wobei, wenn der Zeitabstand seit der letzten aktiven Verbindung eine vorbestimmte Zeitgrenze überschreitet, die Femtozellen, die als die Femtozellen, in welche die Paging-Nachricht zu senden ist, diejenigen Femtozellen sind, von denen bekannt ist, dass das Benutzerendgerät häufig mit diesen und deren Nachbarn verbunden ist.

3. Verfahren nach Anspruch 1 oder Anspruch 2, wobei, wenn eine Paging-Nachricht gerade in diejenigen Femtozellen gesendet wird, von denen bekannt ist, dass das Benutzerendgerät häufig mit diesen verbunden ist, und welche als von dem Benutzerendgerät innerhalb einer vorbestimmten Zeit nicht quittiert bestimmt wird, diejenigen Femtozellen, von denen bekannt ist, dass das Benutzerendgerät häufig mit diesen in Verbindung war, sowie deren benachbarten Femtozellen als die Femtozellen, in welche die Paging-Nachricht zu senden ist, ausgewählt werden.

4. Femtozellen-Steuerungs-Gateway (230) für das Anbinden eines Clusters von Femtozellen (32) an ein Kernnetzwerk, wobei das Femtozellen-Steuerungs-Gateway einen Prozessor (232) umfasst, welcher für das Auswählen, bei Betrieb, derjenigen Femtozellen, in welchen ein Benutzerendgerät, welches sich im Ruhemodus befindet, gepaged werden soll, in Abhängigkeit von einer Benutzerendgerät-Kennung und der Identität mindestens eines Abdeckungsbereichs, mit welchem das Benutzerendgerät vorher verbunden war, konfiguriert ist;
**dadurch**-**gekennzeichnet**, dass jeder Abdeckungsbereich eine Femtozelle ist,
das Gateway weiterhin ein Register umfasst, welches jede Benutzerendgerät-Kennung mit der entsprechenden Identität der jeweiligen mindestens einen Femtozelle, von welcher bekannt ist, dass das Benutzerendgerät häufig mit dieser verbunden war, in Beziehung bringt,
wobei das Register die Zeiten der letzten aktiven Anrufverbindung eines jeden Benutzerendgeräts enthält;
wobei, wenn der Zeitabstand seit der letzten aktiven Verbindung des Benutzerendgeräts kürzer ist als ein vorbestimmter Zeitgrenzwert, die Femtozelle, in welcher der Benutzer zuletzt eine aktive Sitzungsverbindung hatte, als die einzige Femtozelle, in welche das Paging-Signal zu senden ist, ausgewählt wird; und
wenn der Zeitabstand seit der letzten aktiven Verbindung des Benutzerendgeräts den vorbestimmten Zeitgrenzwert überschreitet oder wenn eine Paging-Nachricht gerade in diejenige Femtozelle, in welcher der Benutzer zuletzt eine aktive Sitzungsverbindung hatte, und welche als von dem Benutzerendgerät innerhalb einer vorbestimmten Zeit nicht quittiert bestimmt wird, die Femtozellen, von welchen bekannt ist, dass das Benutzerendgerät häufig mit diesen verbunden war, als die Femtozellen, in welche die Paging-Nachricht zu senden ist, ausgewählt werden.

## Revendications

1. Procédé d'avertissement par radiomessagerie d'un terminal d'utilisateur (UE) qu'il se trouve en mode de veille et se trouve au sein d'une grappe de femtocellules, les femtocellules étant réalisées par des stations de base de femtocellule, les stations de base de femtocellule qui réalisent la grappe de femtocellules étant connectées par le biais d'une passerelle de commande de femtocellule (230) à un réseau central dans lequel la ou chaque femtocellule (32) dans laquelle doit être envoyé le message d'avertissement par radiomessagerie est sélectionnée par la passerelle en fonction d'un identifiant de terminal d'utilisateur et d'une identité d'au moins une zone de couverture à laquelle était préalablement connecté le terminal d'utilisateur, **caractérisé en ce que** chaque zone de couverture est une femtocellule,
un enregistrement (236) est conservé, associant chaque identifiant de terminal d'utilisateur à l'identité correspondante de l'au moins une femtocellule correspondante connue pour avoir été connectée fréquemment au terminal d'utilisateur ;
dans lequel l'enregistrement contient les temps des dernières connexions actives avec chaque terminal d'utilisateur ;
dans lequel, si le retard depuis la dernière connexion active du terminal d'utilisateur est inférieur à un seuil de temps prédéterminé, la femtocellule dans laquelle le terminal d'utilisateur se trouvait en dernier dans une connexion de session active est sélectionnée comme étant la femtacellule unique dans laquelle il faut envoyer le message d'avertissement par radiomessagerie ;
et dans lequel, si le retard depuis la dernière connexion active du terminal d'utilisateur est supérieur au seuil de temps prédéterminé ou si un message d'avertissement par radiomessagerie est envoyé uniquement dans la femtocellule dans laquelle le terminal d'utilisateur se trouvait en dernier dans une connexion de session active et est déterminé comme n'étant pas confirmé par le terminal d'utilisateur pendant une durée prédéterminée, les femtocellules connues pour avoir été connectées fréquemment au terminal d'utilisateur (34) sont sélectionnées à partir de l'enregistrement comme étant les femtocellules dans lesquelles il faut envoyer le message d'avertissement par radiomessagerie.

2. Procédé selon la revendication 1, selon lequel, si le retard depuis la dernière connexion active dépasse une limite prédéterminée, les femtocellules sélectionnées comme étant les femtocellules dans lesquelles il faut envoyer le message d'avertissement par radiomessagerie sont les femtocellules connues pour avoir été connectées fréquemment au terminal d'utilisateur ainsi que leurs voisines.

3. Procédé selon la revendication 1 ou 2, selon lequel, si un message d'avertissement par radiomessagerie est envoyé uniquement dans les femtocellules connues pour avoir été connectées fréquemment au terminal d'utilisateur et déterminé comme non confirmé par le terminal d'utilisateur pendant une durée prédéterminée, les femtocellules connues pour avoir été connectées fréquemment au terminal d'utilisateur ainsi que leurs femtocellules voisines sont sélectionnées comme étant les femtocellules dans lesquelles il faut envoyer le message d'avertissement par radiomessagerie.

4. Passerelle de commande de femtocellule (230) pour la connexion d'une grappe de femtocellules (32) à un réseau central, la passerelle de commande de femtocellule comprenant un processeur (232) configuré pour sélectionner, en cours d'utilisation, dans quelles femtocellules il faut envoyer un avertissement par radiomessagerie à un terminal d'utilisateur qui se trouve en mode de veille, en fonction d'un identifiant de terminal d'utilisateur et l'identité d'au moins une zone de couverture à laquelle était préalablement connecté le terminal d'utilisateur ;
**caractérisé en ce que** chaque zone de couverture est une femtocellule,
la passerelle comprenant en outre un enregistrement associant chaque identifiant de terminal d'utilisateur à l'identité correspondante de l'au moins une femtocellule correspondante connue pour avoir été connectée fréquemment au terminal d'utilisateur ;
dans lequel l'enregistrement contient les temps des dernières connexions actives avec chaque terminal d'utilisateur ;
dans lequel, si le retard depuis la dernière connexion active du terminal d'utilisateur est inférieur à un seuil de temps prédéterminé, la femtocellule dans laquelle l'utilisateur se trouvait en dernier dans une connexion de session active est sélectionnée comme étant la femtocellule unique dans laquelle il faut envoyer le signal d'avertissement par radiomessagerie ; et
dans lequel, si le retard depuis la dernière connexion active du terminal d'utilisateur est supérieur au seuil de temps prédéterminé ou si un message d'avertissement par radiomessagerie est envoyé uniquement dans la femtocellule dans lequel le terminal d'utilisateur se trouvait en dernier dans une connexion de session active et est déterminé comme n'étant pas confirmé par le terminal d'utilisateur pendant une durée prédéterminée, les femtocellules connues pour avoir été connectées fréquemment au terminal d'utilisateur sont sélectionnées comme étant les femtocellules dans lesquelles il faut envoyer le message d'avertissement par radiomessagerie.
